# EUROPEAN PATENT SPECIFICATION

(11) **EP 2 874 949 B1**
(45) Date of publication and mention of the grant of the patent: **15.05.2019**
(21) Application number: 13820641.2
(22) Date of filing: 19.07.2013
(51) Int. Cl.: C02F 1/04

(54) **WASTEWATER CONCENTRATION SYSTEM**
ABWASSERKONZENTRATIONSSYSTEM
SYSTÈME DE CONCENTRATION D'EAUX RÉSIDUELLES

(30) Priority: 20.07.2012 US 201261673967 P
(43) Date of publication of application: 27.05.2015
(73) Proprietor: Heartland Technology Partners LLC, St. Louis, MO 63122 (US)
(72) Inventor: DUESEL, Bernard, F., Goshen, NY 10924 (US); CLERKIN, Craig, Stoughton , WI 53589 (US)
(74) Representative: Studio Torta S.p.A.
(86) International application number: PCT/US2013/051315
(87) International publication number: WO 2014/015270

(56) References cited:
- WO-A1-2011/032275
- US-A- 3 488 686
- US-A- 3 876 490
- US-A- 5 102 503
- US-A1- 2010 236 724
- US-A1- 2011 100 924
- US-A1- 2011 108 471
- US-B1- 6 585 899

## Description

### BACKGROUND

### 1. Field of the Disclosure

The present disclosure relates to systems and apparatuses for concentrating wastewater by separating and removing water from the wastewater.

### 2. Description of the Background of the Disclosure

Wastewater of any form is often initially generated in a very dilute form, having a very low concentration of waste material, such as suspended solids, salts, and other contaminants, mixed with water. Treatment of wastewater generally involves various processes aimed at separating the water portion from the waste material so that the water can be returned to the environment substantially free of the waste material. The waste material may then be processed further, deposited in a landfill, or otherwise disposed of.

Often, the source of wastewater is located a substantial distance from a wastewater treatment facility and must be transported to the wastewater treatment facility by, for example, pipelines or trucks. The costs of transporting the wastewater can be a significant portion of the total cost of treating the wastewater, and significant savings can be realized by reducing the transportation costs. One way to reduce the transportation costs for wastewater is to minimize the volume of the wastewater that must be transported. This can be accomplished by removing water from the dilute wastewater in the field, i.e., near the source and before being transported, so that less volume needs to be transported.

Wastewater concentrators are used to remove water from the wastewater by, for example, evaporating clean water from the wastewater. The products from a wastewater concentrator are clean water vapor, which can be exhausted to air, and a more concentrated form of the wastewater. In some ideal processes, the wastewater is concentrated to the point of saturation, an oversaturated slurry, or even to a solid form.

Many sources of wastewater are temporary and/or located remote from paved roads and other developed sites. Other sources of wastewater may be relatively temporary. Therefore, it is often desirable to have a wastewater concentrator that can be easily transported to and/or from a situs proximate the source, and assembled and disassembled quickly and without requiring extensive heavy construction equipment. However, obtaining these objectives with known wastewater concentrators often limits the treatment capacity of the wastewater concentrator.

Until now, portable wastewater concentrators were often limited to an effective treatment capacity somewhere between 3785 and 75700 litres (one thousand and twenty thousand gallons) per day. If a higher effective treatment capacity were desired, it was generally necessary either to use more wastewater concentrators or to build a larger and more complex concentrator that required extensive field assembly and/or other construction costs. The inventor of the present wastewater concentrator system has attempted to overcome some of the limitations of the current state of technology. For example both US2010/0236724 and US2011/0100924 disclose a compact and portable liquid concentrator.

### SUMMARY

The present application discloses an improved portable wastewater concentrator system that can be transported substantially as a single unit on a truck bed, installed and operated at a remote site with a relative minimum of effort, and can be readily scaled to have an effective treatment capacity of up to and preferably more than 75700 litres (twenty thousand gallons) per day, preferably between approximately 75700 and 227100 litres (twenty thousand and sixty thousand gallons) per day, and more preferably about at least 151400 litres (forty thousand) gallons per day. The inventive water concentrator is defined by claim 1.

According to one aspect of the disclosure, a portable wastewater concentrator assembly includes a wastewater concentrator and a mobile hauling platform, such as a truck bed or semi-truck trailer. The wastewater concentrator includes a liquid evaporator assembly, a gas-liquid separator connected with the liquid evaporator assembly, an exhaust assembly having a fan connected with the gas-liquid separator, and a power plant assembly connected with the exhaust assembly and arranged to drive the fan. The wastewater concentrator is attached to and carried by a skid, and the skid is removably carried by the mobile hauling platform. The wastewater concentrator may be hauled as a single unit on the mobile hauling platform for transportation on roads and to remote operating locations. In some optional arrangements, the wastewater concentrator is carried by a first mobile hauling platform, such as a semi-truck trailer, and accessories are carried by one or more additional mobile hauling platforms, such as by two additional semi-truck trailers.

According to another aspect of the disclosure, a portable wastewater concentrator has a liquid evaporator assembly defining a first portion of a confined gas flow path through the wastewater concentrator. The liquid evaporator assembly is arranged to receive gases and wastewater and evaporate water from the wastewater into the gases by forming a mixture of the wastewater and the gases at an increased velocity of the gas. A gas-liquid separator is connected with the liquid evaporator assembly and has a body defining a second portion of the confined gas flow path along a substantially a horizontal longitudinal axis between an inlet and an outlet. The gas-liquid separator is arranged to receive the mixture through the inlet and separate wastewater from the gases along the second portion of the confined gas flow path. The gas-liquid separator has a sump formed in a bottom of the body and arranged to collect wastewater separated from the mixture. An exhaust assembly defines a third portion of the confined gas flow path. The exhaust assembly is arranged to receive the gases from the outlet of the gas-liquid separator and exhaust the gases. A skid carries the liquid evaporator assembly, the gas-liquid separator, and the exhaust assembly as a single unit. The sump includes a one or more sloped side walls extending downwardly from a bottom of the body through an opening in the skid to below the skid.

According to a further aspect of the disclosure, a gas-liquid separator for use in a wastewater concentrator includes a body having a gas inlet and a gas outlet disposed at opposite ends of a substantially horizontal confined gas flow path. The body defines a separation chamber along the confined gas flow path. At least one, and preferably more than one demister panels are disposed across the gas flow path in the separation chamber, and a sump is formed in a bottom of the body. The sump is arranged to collect liquid falling from the demister panel. An opening extends through a top wall of the body. The opening is shaped complementary to the demister panel and arranged to allow the demister panel to be removed from and/or inserted into the body and across the gas flow path through the opening.

According to yet another aspect of the disclosure, a liquid evaporator assembly includes a mixing chamber connected with a venturi section and an air inlet and defining a confined gas flow path extending from the air inlet to the venturi section. A slanted wall defines a portion of the gas flow path in the mixing chamber between the inlet and the venturi section, wherein the gas flow path has a first cross-sectional area on an inlet side of the slanted wall and a second cross-sectional area on a venturi side of the slanted wall. The first cross-sectional area is larger than the second cross-sectional area. A liquid supply conduit extends into the mixing chamber and is arranged to inject liquid directly against the slanted wall.

According to still another aspect of the disclosure, a wastewater concentrator has a venturi evaporator assembly arranged to be connected to a plurality of sources of heated gases and a supply of wastewater. The venturi evaporator assembly is adapted to mix the gases and the wastewater and evaporate water from the wastewater into the gases. A gas-liquid separator assembly is operatively connected with the venturi evaporator assembly and adapted to separate wastewater and solids from the water and gases.

According to yet a further aspect of the disclosure, a wastewater concentrator includes a mixing chamber forming a first portion of a confined gas flow path, a venturi evaporator assembly connected with the mixing chamber and forming a second portion of the confined gas flow path, and a gas-liquid separator connected with the venturi evaporator and forming a third portion of the confined gas flow path. The mixing chamber is adapted to be connected with a supply of heated gas and a supply of wastewater and arranged to form a mixture of the gas and the wastewater. The venturi evaporator assembly is arranged to receive the mixture from the mixing chamber and to pass the mixture through a venturi for evaporating water from the wastewater into the gas. The venturi is adjustable to increase or decrease a cross-sectional area of the gas flow path. The gas-liquid separated is arranged to separate wastewater from the gas. An air pump is arranged to move the mixture along the gas flow path from the mixing chamber through the gas-liquid separator. One or more sensors are arranged to sense a pressure differential across the venturi. A computer implemented controller receives input from the one or more sensors and provides instructions to adjust the throat and/or a speed of the air pump and/or a pressure of the heated gas upstream of the venturi to achieve a pre-set minimum pressure drop and/or maintain a constant pressure drop across the venturi evaporator in response to the first and second pressures. Optionally, the one or more sensors includes a differential pressure sensor and/or a first sensor on an upstream side of the venturi and a second sensor on a downstream side of the venturi between the venturi and the gas-liquid separator, wherein the computer implemented controller receives input from the differential pressure sensor and/or the first sensor and the second sensor.

According to still another aspect, a gas-liquid separator includes a body, a demister panel, a baffle below the demister panel, and a liquid level gauge arranged to measure the level of liquid in the body. A liquid level controller is arranged to control the level of liquid in the body. The liquid level controller responds to signals from the liquid level gauge and is arranged to maintain the level of liquid in the body at a preselected level above the bottom end of the baffle.

In another aspect, a method of operating the gas-liquid separator includes the steps of filling the body with liquid to a preselected level to form a liquid seal below the demister panel, operating the gas-liquid separator at a steady state, and maintaining the level of liquid in the body at about the preselected level constantly while operating the gas-liquid separator at the steady state.

Other aspects and advantages of the present invention will become apparent upon consideration of the following detailed description.

### BRIEF DESCRIPTION OF THE DRAWINGS

FIG. 1 is an isometric view of a portable wastewater concentrator assembly according to one aspect and disposed on a truck bed for hauling on a road;
FIG. 2 is a cross-sectional elevation of the portable wastewater concentrator assembly along the lines 2-2 of FIG. 1;
FIG. 2A is a schematic piping and instrumentation diagram generally along the cross-sectional elevation of FIG. 2;
FIG. 3 is a cross-sectional elevation of the portable wastewater concentrator assembly along the lines 3-3 of FIG. 1;
FIG. 4 is an isometric view of the portable wastewater concentrator assembly installed for use on a concrete pad;
FIG. 5 is an isometric partial cut away view of a venturi evaporator assembly of the portable wastewater concentrator; and
FIG. 6 is a diagrammatic view of the portable wastewater concentrator assembly including a header system adapted for connection with a plurality of gas sources and including a computer implemented control system.

### DETAILED DESCRIPTION

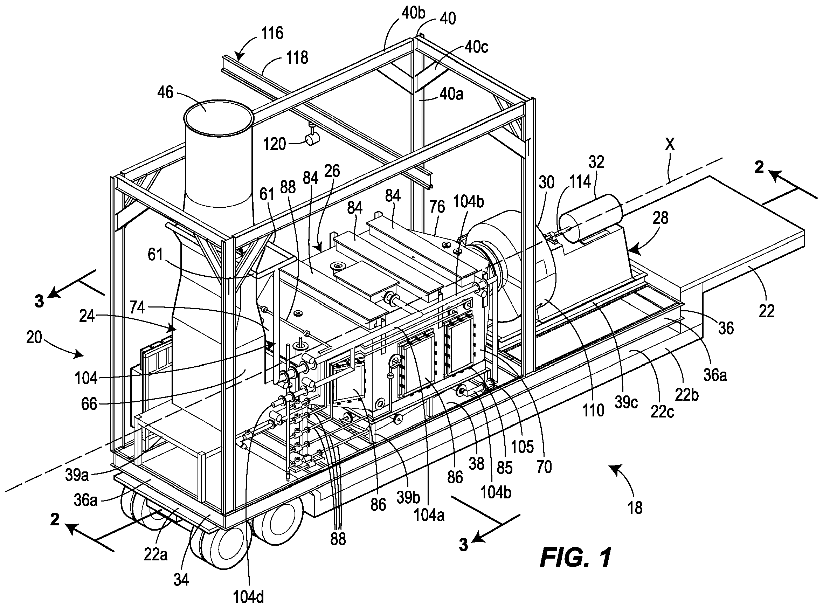

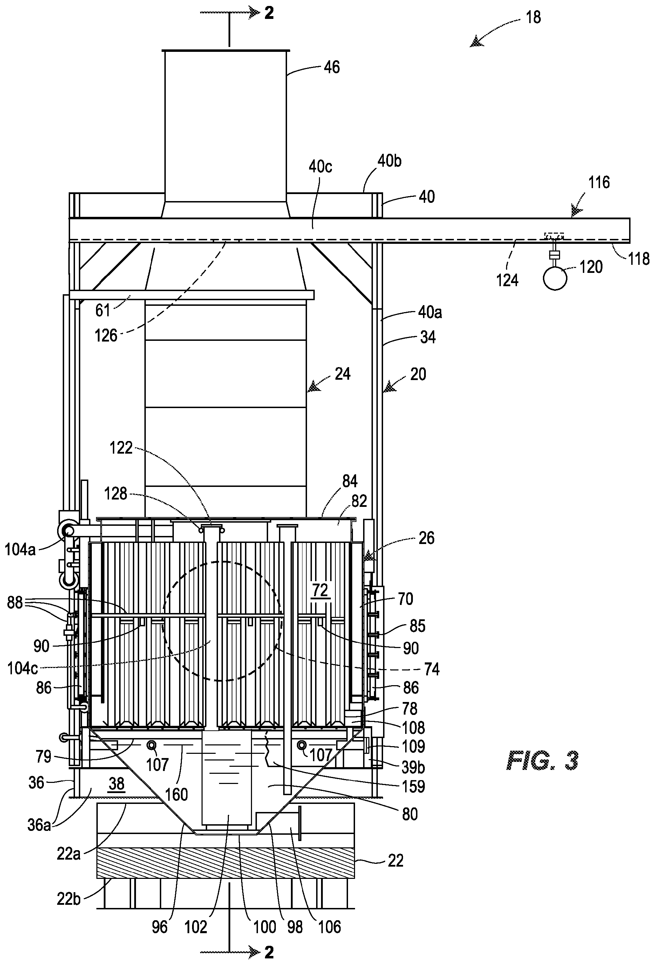

Turning now to the drawings, FIGS. 1-3 show a portable wastewater concentrator assembly 18 according to one preferred aspect of the principles of the present disclosure including a portable wastewater concentrator 20 being carried on a mobile hauling platform 22, such as a truck bed, as a single unit. The portable wastewater concentrator 20 can be hauled as a substantially single unit on the mobile hauling platform 22 on highways and service roads and may be set up for operation either on the hauling platform or may removed from the hauling platform 22 as a single unit and be installed in a permanent or semi-permanent arrangement at a remote operating site, such as an industrial plant, mine site, petrochemical or natural gas extraction site, and the like. In addition, the portable wastewater concentrator 20 is able to be sized to have an effective treatment capacity of up to 151400 litres (forty thousand gallons) gallons per day or more without requiring substantial modification to the basic design disclosed herein. Thus, the portable wastewater concentrator 20 provides substantial improvements over prior known portable wastewater concentrators. The portable wastewater concentrator 20 in some arrangements includes many aspects and design details of the wastewater concentrators described in detail in U.S. Patent Application No. 12/705,462 filed, February, 12, 2010.

The mobile hauling platform 22 is preferably a semi-trailer, such as a standard double-drop semi trailer, having an upper level carrying surface 22a and a lower level carrying surface 22b defining a recessed portion 22c below the upper level carrying surface. However, the mobile hauling platform 22 may be any hauling platform with wheels or tracks, for example, that is adapted to be drawn or moved by a truck, tractor, team of oxen, or other such mobile pulling unit capable of carrying the portable wastewater concentrator 20 on roads and over ground. Alternatively, for example, the mobile hauling platform 22 could be a flat bed truck. In some optional arrangements, the wastewater concentrator is carried by a first mobile hauling platform, such as a semi-truck trailer, and accessories are carried by one or more additional mobile hauling platforms, such as by two additional semi-truck trailers. In an optional arrangement, a permanent portable wastewater concentrator unit may be formed by integrating the skid 34 to a standard single drop trailer, wherein the skid and trailer frame are permanently secured together into a single unit, such as by welding or fasteners.

The portable wastewater concentrator 20 includes a liquid evaporator assembly 24, a "mist eliminator" in the form of a gas-liquid separator 26, and an exhaust assembly 28. The gas-liquid separator 26 is operatively connected with the liquid evaporator assembly 24, and the exhaust assembly 28 is operatively connected with the gas-liquid separator 26. The portable wastewater concentrator 20 also includes an air pump 30, such as a fan, and a power plant 32 arranged to drive the air pump. A skid 34 carries and supports the components of the portable wastewater concentrator 20 as a single unit. Together, the liquid evaporator assembly 24, the gas-liquid separator 26, and the exhaust assembly 28 form a confined gas flow path P, wherein gases and/or entrained wastewater flow along the confined gas flow path P through the wastewater concentrator 20 from the liquid evaporator assembly 24 through the gas-liquid separator 26 and out the exhaust assembly 28 to the surrounding atmosphere and/or other discharge ports.

The skid 34 may take any form sufficient to allow the portable wastewater concentrator 20 to be lifted as a single unit off of the mobile hauling platform 22 and onto an operating platform at an operating site by, for example, a crane. In a preferred arrangement, the skid 34 forms a generally planar horizontal support frame 36 formed of beams 36a, such as steel I-beams, C-section beams, tubing, and the like, in a rectangular shape sufficient to surround an outer peripheral footprint of the liquid evaporator assembly 24, the gas-liquid separator 26, and the exhaust assembly 28. The beams define at least a central opening 38, and preferably define several openings through the horizontal support frame 36. The horizontal support frame 36 preferably is disposed at least below the liquid evaporator assembly 24, the gas-liquid separator 26, the air pump 30, and the power plant 32, each of which is preferably secured to the horizontal support frame 36, either directly or indirectly by intermediate supports, such as support frames 39a, 39b, and 39c. The horizontal support frame 36 in the depicted arrangement includes four peripheral I-beams, including of two long beams and first and second end cross-beams connected to form a rectangle having a long dimension aligned with a longitudinal axis of the liquid evaporator assembly 24, gas-liquid separator 26, and exhaust assembly 28; first, second, and third longitudinally spaced apart cross-beams extending orthogonal to the longitudinal axis between the first and second end cross-beams and disposed under the gas-liquid separator; and first and second laterally spaced apart longitudinal runners extending from the second end cross-beam to the adjacent third cross-beam under the exhaust assembly 28. The skid 34 is arranged to be removably supported by the mobile hauling platform 22, for example with the horizontal support frame 36 disposed on the upper level 22a of the mobile platform 22.

The support frames 39a, 39b, and 39c support and connect the liquid evaporator assembly 24, gas-liquid separator 26, and exhaust assembly 28, respectively, to the horizontal support frame. In the arrangement depicted in the drawings, the support frame 39a is in the form of a table having a top and four legs, wherein the liquid evaporator assembly 24 rests on the top, and the four legs are connected to the first end cross-beam and the adjacent first cross-beam of the support frame 36. The support frame 39b is in the form of a rectangular upper frame and four legs disposed over the central opening 38, wherein the upper frame is connected to an underside periphery of the gas-liquid separator 26, and the four legs are connected to the first cross-beam and second cross-beam of the support frame 36. The support frame 39b does not have a top and a sump of the gas-liquid separator projects downwardly through the rectangular upper frame and the central opening 38 as described hereinafter. The support frame 39c is in the form of a rectangular frame formed of I-beams, wherein the air pump 30 and power plant 32 are connected to the rectangular frame and the rectangular frame is connected to the first and second longitudinal runners, the second end cross-beam, and the adjacent third cross-beam.

The skid 34 preferably also includes a lift frame 40 extending above the horizontal frame formed, for example, of columns and cross-beams of steel members, such as I-sections, C-sections, tubing, and the like. The lift frame 40 in the depicted arrangement includes four vertical columns 40a extending upwardly from an outer periphery of the horizontal support frame 36; longitudinal beams and cross-beams 40b that form a rectangular frame and connect the vertical beams; and corner braces 40c at one or more of the intersections between a longitudinal beam 40b, a cross-beam 40b, and a vertical column 40a. The vertical columns 40a preferably are located around the outer periphery of a significant portion of at least the liquid evaporator assembly 24 and gas-liquid separator 26, as shown in the drawings, thereby forming a scaffolding surrounding at least the same. The lift frame 40 is in some arrangements used to support a hoist, as described hereinafter, and may be constructed after the skid 34 is set in place at an operating location. Preferably, the skid 34 is not lifted with the lift frame 40 secured to the skid 34.

The skid 34 may be made of any materials suitable for supporting the portable wastewater concentrator 20 as a movable unit as described herein, such as steel, and connected, for example, by welds, bolts, and/or rivets. Preferably, the skid 34 is sized and arranged to be hauled on a semi-truck trailer on highways. In one arrangement, as depicted in the drawings, the skid 34 has a length along the longitudinal axis of approximately thirty nine feet (11.89 m), a width of approximately ten feet four inches (3.15 m), and a height of approximately twenty feet (6.10 m).

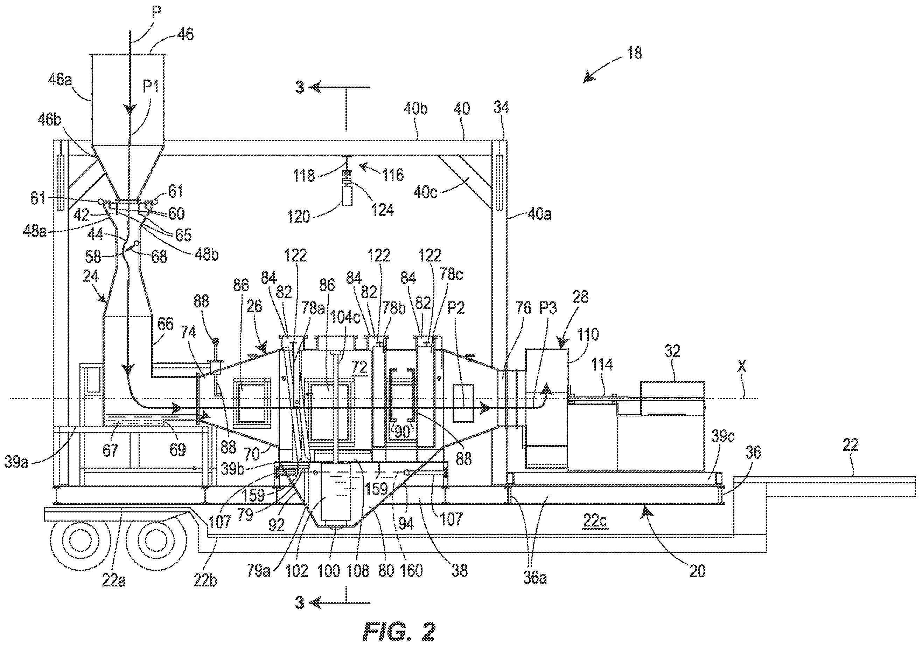

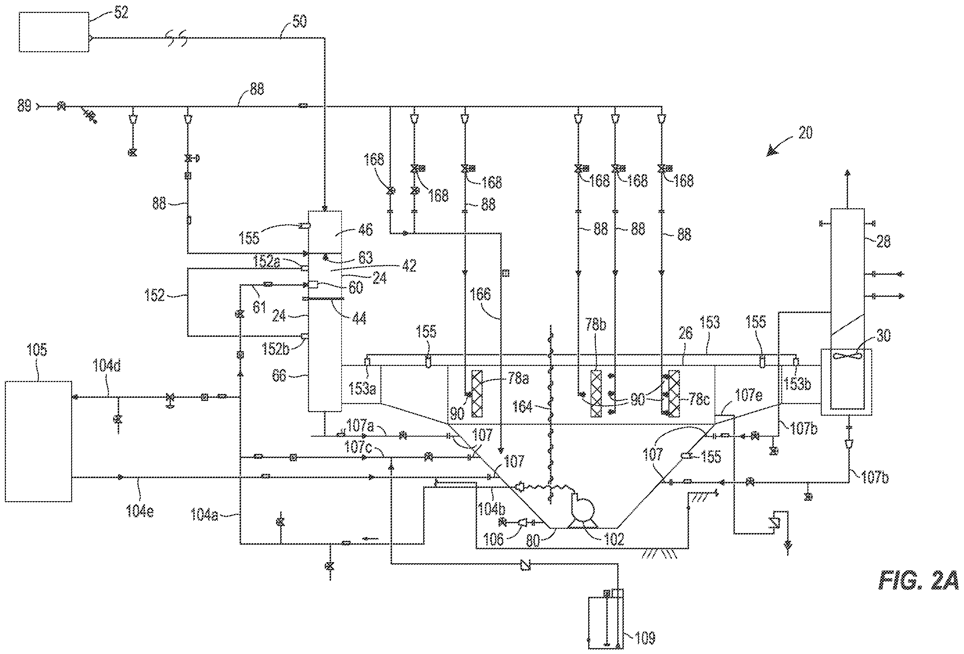

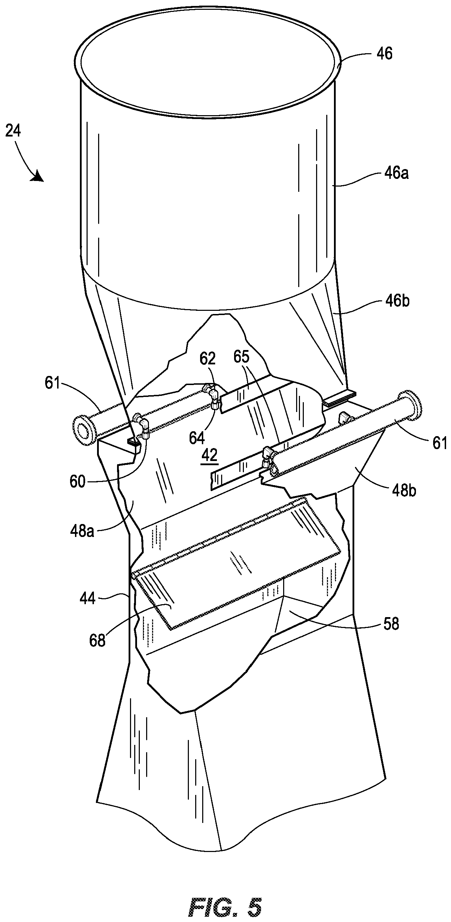

The liquid evaporator assembly 24 is arranged to receive wastewater and evaporate water from the wastewater into a stream of gas, such as hot waste gas from the exhaust of another process. The liquid evaporator assembly 24 preferably includes a venturi evaporator, which evaporates the water by mixing the wastewater and gases and passing the mixture through a venturi section that rapidly reduces the pressure of the mixture and further mixes the wastewater and gases an amount sufficient to cause rapid evaporation of the water from the wastewater. As best seen in FIGS. 2 and 5, the liquid evaporator assembly 24 includes a mixing chamber 42 connected with a venturi assembly 44, which together define a first portion P1 of the confined gas flow path P.

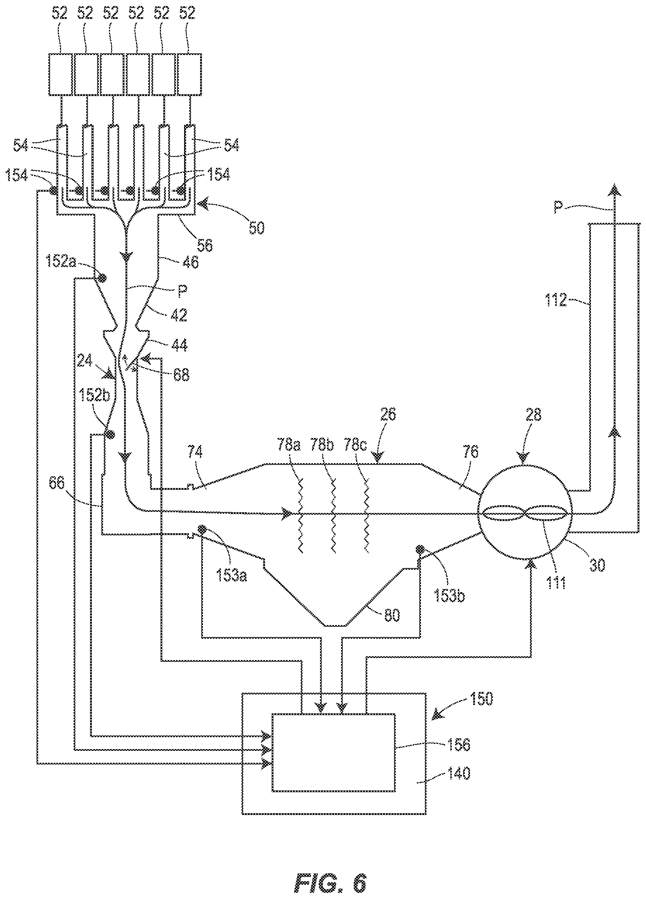

The mixing chamber 42 has a gas inlet 46 arranged for connection with one or more sources of gases, and two opposing slanted side walls 48a, 48b that at least partly define and narrow the first portion P1 of the confined gas flow path from the gas inlet 46 toward the venturi assembly 44. Thus, the confined gas flow path P has a first cross-sectional area on an inlet, or upstream side of the slanted walls 48a, 48b and a second, smaller cross-sectional area on a venturi, or downstream side of the slanted walls. The mixing chamber 42 is preferably elevated above the venturi assembly 44 and adapted to be coupled with a supply manifold 50 (shown in FIG. 6) that collects heated gas from a plurality of separate sources 52 of heated exhaust gases. In the arrangement depicted in the drawings, the gas inlet 46 has a cylindrical tube section 46a that connects to the supply manifold 50, a transition section 46b that transitions from a circular cross-section to a rectangular cross-section that exhausts into an elongate rectangular tapered trough section defined partly by the slanted side alls 48a, 48b that extend between two side walls.

The supply manifold 50, as shown in FIG. 6, is arranged to connect at least one, and preferably up to six or more sources 52 of heated gas, such as a waste gas flare stack or burner, exhaust from an internal combustion engine, or furnace gas exhaust, to the gas inlet 46 of the mixing chamber 42. In one preferred arrangement, the manifold 50 has six connection ducts, such as runners 54, one arranged for connection with each of six sources 52 of heated gas, that are connected with a collector 56, which is connected to the inlet gas 46. However, the manifold may be arranged to connect to more or fewer sources by having more or fewer runners 54.

A plurality of injection nozzles 60 project into the trough section of the mixing chamber 42 downstream of the gas inlet 46 and upstream of the venturi section 44. Each injection nozzle 60 is connected with a supply of wastewater, such as concentrated wastewater from wastewater return pipes 61 disposed on opposite exterior sides of the trough section, and is arranged to inject the wastewater into the mixing chamber 42 directly against one of the slanted side walls 48a, 48b. The wastewater return pipes 61 in a preferred arrangement carry re-circulated concentrated wastewater, such as concentrated wastewater drawn from the gas-liquid separator 26. Each injection nozzle 60 includes a nozzle section 64 pointed downwardly toward and adapted to spray the wastewater against the adjacent slanted side wall 48a or 48b. Preferably, the nozzle section 64 is connected to the wastewater return pipe 61 by a liquid supply conduit 62, which in some instances extends horizontally from the wastewater return pipe 61. In some arrangements, either the nozzle section 64 extends downwardly through a horizontal wall of the mixing chamber or the liquid supply conduit 62 extends horizontally through a sidewall of the mixing chamber 42. In other arrangements, the lowest distal end of the nozzle section 64 is flush with the horizontal wall of the mixing chamber. The nozzle section 64 may be formed of an open ended tube, and the liquid supply conduit 62 may be formed of another tube that has an inside diameter less than an inside diameter of the open ended tube. In a preferred arrangement, the liquid evaporator assembly 24 includes four of the injection nozzles 60, two directed against each of the opposing slanted side walls 48a, 48b, and each nozzle section 64 has an inside diameter of between approximately 10 mm and 0.5 mm and preferably approximately 2.5 mm (1 inch). However, fewer or more injections nozzles may used. Optionally, the nozzles 60 and/or the nozzle sections 64 are removably secured to provide for easy removal, maintenance, and re-installation.

Nozzle shrouds 65 optionally are arranged to protect the nozzles 60 from direct contact with the heated gases from gas inlet 46. Because the heated gases may have very hot temperatures, such as of several hundreds of degrees Celsius, direct contact with the nozzles may cause excessive scaling of salts on the nozzles 60 and thereby lead to plugging and/or otherwise cause decreased functionality. Preferably, the nozzle shrouds 65 are disposed between each nozzle 60 and the direct stream of heated gases and arranged to deflect the direct stream of heated gasses from impinging against the nozzles 60. For example, the shrouds 65 depend downwardly from the horizontal wall of the mixing chamber between the nozzle section 64 and the opening between the gas inlet 46 and the mixing chamber 42. Preferably, each shroud 65 extends downwardly past the lowest distal end of the nozzle section 64.

In a preferred option, raw or un-concentrated wastewater, i.e., wastewater that has not been treated by the portable wastewater concentrator 20, is supplied to the confined gas flow path P at a location upstream from the nozzles 60. In one arrangement, the raw wastewater is injected into the confined gas flow path P with one or more feed nozzles 63. The feed nozzles 63 are located to inject the raw wastewater into the gas inlet 46 or into the manifold 50. The raw wastewater injected with the feed nozzles 63 in some instances may quench the hot gasses from the heat sources 52. Quenching includes cooling the hot gasses and entraining the raw wastewater into the flow of hot gasses prior to reaching nozzles 60 and/or entering the mixing chamber 42. In some arrangements, the feed nozzles 63 are arranged to inject the raw wastewater as fine droplets or a mist to increase quenching.

The venturi assembly 44 receives the mixture of gas and wastewater from the mixing chamber 42 and includes an adjustable throat 58 arranged to allow selective variation of the cross-sectional area of the venturi to increase or decrease the velocity of the gases and/or the pressure drop across the throat. The cross-sectional area of the adjustable throat 58 may be increased or decreased in any available manner, such as with one or more movable orifice plates 68. In one arrangement, the orifice plate 68 is formed by a baffle that is pivotable around a hinge between a first position that closes the throat 58 and a second position that opens the throat 58. The orifice plate 68 may be pivoted by any actuator (not shown) sufficient to controllably move the baffle between the first and second positions, such as a gear and/or lever arm functionally connected with a linear actuator, a rotary actuator, a manual positioning actuator, and/or a servo motor. In the depicted arrangement, the throat 58 is formed of a narrow rectangular duct section attached to the narrowest portion of the trough section of the mixing chamber and an outwardly tapered rectangular duct section extending from a downstream side of the narrow rectangular duct section. The orifice plate 68 is a rectangular plate that pivots around an axis, such as a rod or hinge, extending along one side of the long dimension of the narrow rectangular duct section forming the throat 58. Although only one orifice plate 68 is shown in the drawings, larger units, such as units designed to process 151400 litres (forty thousand gallons) or more per day, may include two movable orifice plates 68 across the throat 58, for example disposed on opposite sides of the throat 58 and arranged to close by moving toward each other and to open by moving away from each other.

The mixing chamber 42 and the venturi assembly 44 are preferably oriented generally vertically, as shown in the drawings, with the mixing chamber disposed above the venturi assembly, which in some arrangements provides for even distribution of wastewater across the cross-sectional area of the first portion P1 of the confined flow path P. The liquid evaporator assembly 24 as shown also includes an elbow duct section 66 connected to the downstream side of the outwardly tapered rectangular duct section of the venturi assembly 44 and connected to the gas-liquid separator 26. The elbow duct section 66 is arranged to conduct the mixture of gases and wastewater from the venturi assembly 44 into the gas-liquid separator 24. The elbow duct section 66 rests on and is supported by the top the support frame 39a. In the depicted arrangement, the mixing chamber 42, the venturi assembly 44, and the elbow duct section 66 have generally rectangular cross-sectional forms. However, the mixing chamber 42, the venturi assembly 44, and the elbow duct section 66 may have other shapes and arrangements.

A flooded elbow is formed at the bottom of the elbow duct section 66 by a sump 67 located where the duct changes direction from a vertical air flow path to a horizontal air flow path. The sump 67 is formed by a shallow recess at the bottom of the vertical section of the elbow duct section 66 and includes a raised lip 69 or weir between the sump 67 and an inlet 74 into the gas-liquid separator 26. As mixed wastewater and gasses flow from the venturi 44, the abrupt change in direction of the mixture from the vertical to the horizontal, such as approximately a 90 degree angle, causes at least some heavier droplets of wastewater to collect in the sump 67. As wastewater collects in the sump 67, the level of the collected wastewater rises until the collected wastewater overflows the raised lip 69 and runs down the inlet 74 into the sump 80 of the gas-liquid separator. Thus, the sump 67 forms a preliminary or first stage water removal. The collection of wastewater in the sump 67 may also reduce erosion of the interior surface of the elbow duct section 66 that may otherwise be caused by the high velocity flow of gasses and wastewater.

The gas-liquid separator 26 includes a body 70 defining an enclosed separation chamber, such as a demister chamber 72, the inlet 74 that receives the mixture of gases and wastewater from the venturi assembly, an exhaust outlet 76 that is connected with the exhaust assembly 28, and a sump 80 disposed at a bottom of the body. The gas-liquid separator 26 defines a second portion P2 of the confined gas flow path P, which extends through the demister chamber 72 from the inlet 74 to the exhaust outlet 76. The body 70 has a generally rectangular polyhedron shape surrounding the demister chamber 72, having a rectangular top panel, and opposing rectangular side walls extending down from opposite side edges of the top panel. Each of the inlet 74 and the exhaust outlet 76 has a truncated pyramidic shape, having top, bottom, and opposite side walls, each of which tapers or slopes outwardly from the respective inlet and outlet toward the demister chamber 72. When assembled in a preferred operating position, the inlet 74 and the exhaust outlet are aligned substantially horizontally along a longitudinal axis X through the body 70.

One or more, and preferably three demister panels 78a, 78b, and 7bc are disposed inside the demister chamber 72 and arranged to separate wastewater entrained in the gases from the gases. Preferably, the demister panels 78a-c are disposed across the confined gas flow path P to form a tortuous gas flow path through demister chamber 72 to separate the wastewater from the gases. In the depicted embodiment, for example, the second portion P2 of the confined gas flow path P extends along the substantially horizontal longitudinal axis X from the inlet 74 to the exhaust outlet 76, and the demister panels 78 are aligned generally orthogonally to and across the longitudinal axis. The demister panels 78b, 78c closest to the exhaust outlet 76 are preferably chevron demisters and are aligned vertically and orthogonally across the second portion P2 of the confined gas flow path. The chevron demisters are carried by a generally rectangular peripheral support frame that extends around a peripheral side edge of each chevron demister. The demister panel 78a closest to the inlet 74 is preferably formed of half-tube sections, similar to common sheet-piling sections, that are vertically oriented and horizontally spaced apart and overlapping, carried by a support frame. The half-tube sections are slanted or sloped between approximately two degrees and fifteen degrees from the vertical. The support frame includes vertical side posts on opposite ends of the half-tube sections, and a support member, such as a horizontal rod that extends between the vertical side posts. Preferably, each demister panel 78a-c has a generally planar peripheral form factor and spans the entire area across the demister chamber 72 between the side walls and top wall of body 70 to force the gases and entrained wastewater to go through each demister panel to ensure maximum separation of entrained wastewater from the gases. Each of the demister panels 78a-c preferably is assembled to be moved as a unit, with the demister carried by the support frame for easy installation into and removal from the demister chamber 72, for example as describe hereinafter.

A screen 79, such as an elongate metal grate, is disposed inside the gas-liquid separator 26 immediately below the bottom of the demister panel 78a. The screen 79 is arranged to prevent large particles knocked down by the demister panel 78a, such as trash or cinders, from falling into the sump 80 and subsequently being sucked through the sump pump 102. The screen 79 extends completely from the left to right side walls of the body 70 and is supported from the sump by, for example, a brace 79a.

A top access opening 82 is formed in the top wall of the body 70 directly above each demister panel 78a-c to allow each demister panel to be installed and removed vertically through the top wall, by a hoist or crane, for example. Each top access opening 82 preferably is covered with a removable hatch 84, such as a door or panel, bolted or otherwise latched to the body. Each top access opening 82 is shaped complementary to the respective demister panel 78, such as by being, for example, in the shape of a long narrow rectangular slot having a width slightly larger than a width of the respective demister panel 78 and a length slightly longer than a length of the respective demister panel. Thus, for example, the top access openings 82 shown in the drawings extend completely to each opposite side wall of the body 70.

A plurality of access doors 86 are disposed in side walls of the body 70, the inlet 72, and the exhaust outlet 74 to provide ready access to all regions of the interior of the gas-liquid separator 26. The access doors 86 are releasably retained in a closed position by a quick-release latching system 85 that can be quickly locked and unlocked, such as a pivotable latches and cam locks, and/or spring latches, without requiring disassembly of the locking mechanism. The access doors 86 are preferably sized to allow easy ingress and egress of a person into and out of the gas-liquid separator 26.

A wash water system is included as part of the gas-liquid separator 26 to easily wash scale and/or other accumulated solids off of the demister panels 78. In one exemplary arrangement, as best seen in FIG. 2A, feed pipes 88 extend into the demister chamber 72 and feed wash water to a number of nozzles 90 that are arranged to spray the wash water onto the demister panels 78. The feed pipes 88 are connected with a source 89 of wash water (not shown), preferably the raw wastewater, and one or more pumps (not shown) may be connected with the feed pipes to pump the wash water to the nozzles 90 to spray the demister panels 78. Optionally, at least one of the feed pipes 88 in one arrangement also is arranged to provide wash water to the mixing chamber 42 to wash the internal area of the mixing chamber and/or to supply the feed nozzles 63.

The sump 80 defines the bottom of the gas-liquid separator 26, and preferably is defined by a bottom of the body 70 directly below the demister chamber 72. The sump 80 is arranged to collect wastewater that has collected on the demister panels 78, such as by being disposed directly below the demister panels 78 so that wastewater collected on the demister panels 78 can drip downwardly under the force of gravity and be collected in the sump. The sump 80 projects downwardly from the body 70 through the central opening 38 of the horizontal support frame 36 and below the skid 34 and may be scaled up or down as needed to accommodate treatment capacities of more than approximately 75700 litres (twenty thousand gallons) per day, and preferably between at least 75700 and 227100 litres (twenty and sixty thousand gallons) per day, and in one preferred embodiment up to at least approximately 151400 litres (forty thousand gallons) per day and more. The sump 80 is shaped and arranged to collect wastewater from all regions of the demister chamber 72 and preferably has slanted or sloped walls extending downwardly from around the entire outer periphery of the demister chamber, such as having the form of an inverted cone or a truncated inverted pyramid with four sloped walls, a front wall 92 closest to the inlet 74 , a rear wall 94 closest to the exhaust outlet 76, and two side walls 96, 98 spanning from the front wall to the rear wall, extending downwardly from the bottom of the body 70 directly below the demister panels 78. The truncated inverted pyramid form also preferably includes a bottom wall 100 connecting the bottom ends of the sloped side walls 92, 94, 96, 98. At least one, and preferably each, sloped wall 92, 94, 96, 98 forms an angle between 0 degrees and 90 degrees from the horizontal longitudinal axis X of the gas-liquid separator 76. The front wall 92 is sloped at an angle of between approximately thirty five degrees and sixty five degrees from the horizontal longitudinal axis X, and more preferably an angle of approximately fifty five degrees. Each of the rear wall 94 and two side walls 96, 98 is sloped at an angle between approximately forty five degrees and approximately fifty five degrees, and more preferably at an angle of about forty five degrees from the horizontal longitudinal axis X. The bottom wall 100 of the sump 80 preferably defines a lowest hydraulic point in confined gas flow path P through the wastewater concentrator 20, and a submersible sump pump 102 is disposed on the bottom wall 100 at the bottom of the sump 80. The submersible sump pump 102 pumps wastewater that collects in the sump 80 through a recirculation system that returns the collected wastewater to the injection nozzles 60 for recirculation through the liquid evaporator assembly 24.

In one arrangement, the sump 80 is secured to the demister chamber 72 such that the sump 80 may be removed, such as for transportation, and/or attached at the operating site, such as when the wastewater concentrator 20 is set up for operation at an operating site. The sump 80 may be releasably attached in any manner sufficient to allow selective attachment and removal. Some exemplary releasable attachment mechanisms include releasable fasteners, such as bolts or clamps, or with releasable interlocking mechanisms, such as bayonette-type locking mechanisms, or other similar releasable interlocking mechanisms. In one arrangement, the sump 80 is attached to the demister chamber 72 at the operation site with fiberglass. In another arrangement, the sump 80 is removably secured to the demister chamber 72 with a flexible joint, such as a rubber boot. Removably securing the sump 80 to the demister chamber 72 may be particularly useful for larger capacity units, such as a wastewater concentrator sized to process 378540 litres (100000 gallons) of wastewater per day or more. Thus, the releasable attachment mechanisms may make scaling the size of the wastewater concentrator 20 easier and more adaptable.

Turning again to FIG. 2A, the recirculation system includes a recirculation pipe system 104 that returns separated wastewater back to the nozzles 60 via the wastewater return pipes 61, and the sump pump 102 to pump the wastewater through the recirculation pipe system 104. The recirculation pipe system 104 includes a main return pipe 104a, which connects to a pipe 104b extending into the sump 80 through the side wall 96 and to a pump lifter pipe 104c or a hose connected to the sump pump 102. The main return pipe 104a connects to the wastewater return pipes 61 to feed the concentrated wastewater back to the nozzles 60.

A secondary return pipe 104d branches off from the main return pipe 104a and connects with an ancillary processor 105 for the concentrated wastewater. In one arrangement, the ancillary processor 105 is a wastewater thickener processor arranged to thicken the concentrated wastewater. The ancillary processor 105 includes one or more storage and/or mixing tanks in which thickeners and/or coagulants may be added to the concentrated wastewater to further thicken the wastewater and/or one or more settling tanks in which sediments are allowed to settle out of and be separated from the concentrated wastewater. Preferably, at least some portions of the thickened concentrated wastewater, such as liquids drawn off from the settling tanks, are returned to the portable wastewater concentrator 20.

At least one drain port 106 is preferably disposed at the bottom of the sump, such as through the side wall 98 and/or through the bottom wall 100, in order to facilitate removal of accumulated sludge from the sump. The drain port 106 may be a flanged outlet pipe stub as shown in the drawings arranged for connection to removal piping or any other removal system. The drain port 106 may be connected by appropriate pipes and pumps with other ancillary processors, for example, a settling chamber (not shown) for further separation of solids from liquids. In some arrangements, the drain port 106 includes a valve to allow selective removal of sludge, and the drain port is arranged for connection with a removal vehicle, such as a vacuum truck or waste holding tank.

A plurality of stub pipes 107 extend into the sump 80 through the sloped side walls 92, 94, 96, 98 for intake and/or discharge of raw or concentrated wastewater or other liquid between the sump 80 and other processors. In one arrangement, at least one stub pipe 107 is connected with a collection pipe 107a that draws liquid condensate from the bottom of the elbow 66; at least one and preferably two stub pipes 107 are connected with collection pipes 107b that connect to respective upper and lower drains from the exhaust assembly 28; a stub pipe 107 is connected with a return pipe 104e from the wastewater thickener processor; and a stub pipe 107 is connected with a return bypass line 107c from the main return pipe 104a. Optionally, anti-foaming agents may be added to the concentrated wastewater, for example through a line 107d connected with the return bypass line 107c from a mixer 109.

An overflow drain 107e is located through the body to maintain the top level 160 of wastewater at or below the desired height. Preferably, the overflow drain 107e is located at a level arranged to form a liquid seal along a baffle or skirt below the bottom of at least one, and preferably all of the demister panels 78a-c to be formed and/or maintained during operation.

A float or skimmer tray 108, such as a shallow pan or tray, is disposed on the one side wall of the body 70 at a level expected to be a top water line as defined by the sump pump 102 or other means. The skimmer tray 108 drains to an overflow pipe 109, which in some arrangements is connected with the recirculation pipe system 104 to return any overflow for reprocessing through the portable wastewater concentrator 20.

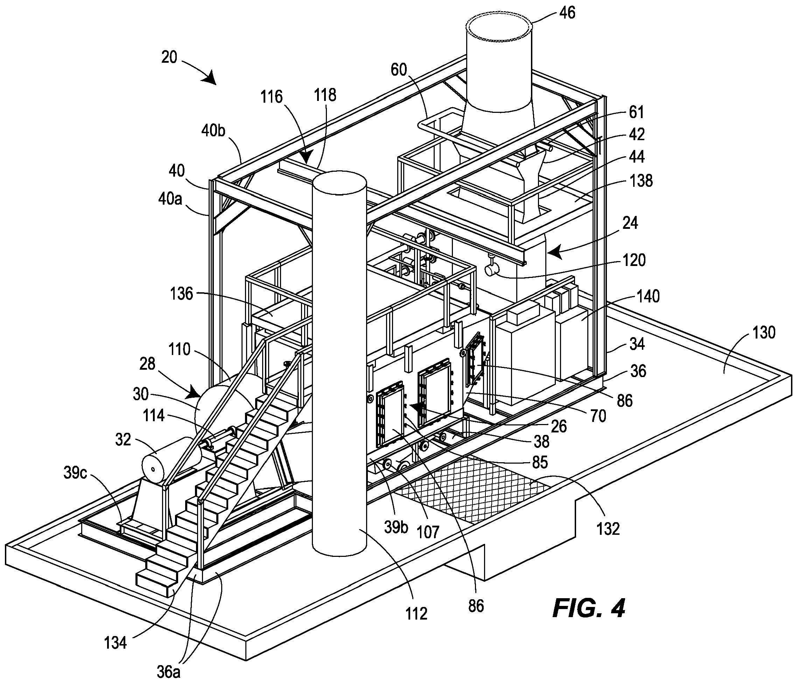

The exhaust assembly 28 in a preferred arrangement includes the air pump 30 and the power plant 32. The air pump 30 is operatively connected with the confined gas flow path P to draw the gases through the liquid evaporator assembly 24 and the gas-liquid separator 26 and out the exhaust assembly to the surrounding atmosphere. The air pump 30 may be operatively arranged in any location sufficient to effectuate movement of gases along the confined gas flow path P as described. In a preferred arrangement shown in the drawings, the air pump 30 includes a centrifugal fan with a shroud 110 that surrounds fan blades 111 and has an inlet that connects with the exhaust outlet 76 of the gas-liquid separator 26 and an outlet that connects with an optional exhaust stack 112 (shown in FIG. 4). The shroud 110 defines a third portion P3 of the confined gas flow path P from the inlet to the outlet. The power plant 32 may be any power source sufficient to rotate a drive shaft that is attached to the air pump 30 and arranged to drive the fan blades, such as a gas or diesel internal combustion engine, a steam engine, an electric motor, a servo motor, a water paddle wheel, etc. Preferably, the power plant 32 is arranged to drive the fan blades 111 at selected different speeds in order to be able to control the velocity and/or flow volume of gases along the confined gas flow path P at least as described herein below. In the depicted arrangement, the power plant 32 is located adjacent to the fan 30 opposite the gas-liquid separator 26 and drives a shaft 114 that is arranged to rotate the fan blades 111. The exhaust assembly 28 may further include additional ducts (not shown) to partly define the third portion P3 of the confined gas flow path P from the gas-liquid separator 26 to the exhaust stack 112 as desired for particular special arrangements and other design criteria peculiar to a particular application.

The exhaust stack 112 may take any form sufficient to direct exhaust from the outlet of the shroud 110 to the atmosphere, such as a vertical cylindrical shape shown in the drawings, and is separable from the shroud 110 and the remaining portions of the exhaust assembly 28. In a preferred arrangement, the exhaust stack 112 is not carried by the skid 34, but rather is carried separately from the portable wastewater concentrator 20 and attached to the outlet of the shroud 110 at the operation site by any convenient means, such as with bolts or by welding. The exhaust stack 112 may be supported by a support surface separate from the skid 34.

A crane 116 is supported by the lift frame 40 above the top access openings 82 and arranged to install and remove the demister panels 78 through the upper portals top access openings 82. The crane 116 in one arrangement is in the form of an overhead or gantry crane and includes a support beam 118, such as an I-beam, C-section beam, or box beam, supported by opposite cross-beams 40b over the upper portals and carrying a lift 120, such as a pulley, a cable hoist, or other lifting mechanism. The support beam 118 may be movable along the cross-beams 40b, by being supported on trolleys or other moveable support system for example, to allow the support beam 118 to travel along the cross-beams 40b from the inlet 74 of the gas-liquid separator 26 to the exhaust outlet 76. The lift 120 may be supported by the support beam 118 and may also be movable along the cross-beams 40b by another movable support system, such as trolleys (not shown). Thereby, the lift 120 preferably is movable along two crossing axes defined by the cross-beams 40b and the support beam 118 to be positioned over all areas of at least the gas-liquid separator 26 and more preferably also over at least portions of the liquid evaporator assembly 24. In the depicted arrangement, the support beam 118 is oriented substantially perpendicular to the second portion P2 of the confined gas flow path P and moves along the cross-beams 40b substantially parallel with the second portion of the confined gas flow path. Optionally, each demister panel 78 includes a projection 122, such as a T-member or hook, arranged to be inserted into a track 124 defined along the support beam 118, and the projection 122 slides along the track 124 when the demister panel 78 is removed from the respective top access opening 82. The track 124 is preferably aligned transverse to the second portion P2 of the confined gas flow path P. The track 124 includes an open end 126 arranged to receive and release the projection 122 near, such as directly above, the top access opening 82, and the projection 122 preferably includes a roller 128, such as one or more caster wheels, that are received within the track 124 and facilitate moving the demister panel 78 transversely along the track. In another arrangement, the crane 116 is in the form of a jib crane (not shown). In this arrangement, the support beam 118 forms a boom that is arranged to rotate horizontally over the top of at least the gas-liquid separator 26. The support beam 118 of the jib crane may be supported directly from one of the beams 40b of the lift frame 40 or may be supported by a vertical support, such as one of the columns 40a or a separate column (not shown), and arranged to rotate about the vertical support.

Referring now particularly to FIG. 4, the portable wastewater concentrator 20 is shown operatively assembled at an operation site and located on a support surface, such as a concrete pad 130 on the ground, that includes a recess, such as a trough 132, arranged to receive the portion of the sump 80 that projects below the skid 34. Appropriate covering, such as grating, may cover portions the trough 132. The skid 34 rests directly on and is supported by the concrete pad 130 and preferably maintains the remaining components of the portable wastewater concentrator 20 elevated above the top surface of the concrete pad 130. The exhaust stack 112 rests on the concrete pad 130 directly adjacent to the skid 34. Additional accessory structures, such as an access stair 134 and access platforms 136 and 138 also may be attached to the portable wastewater concentrator 20 at the operation site in any convenient manner, such as welding or bolting. The access stair 134 is arranged to allow an operator to climb from the concrete pad 130 to the access platform 136, which preferably is located over the top of the gas-liquid separator 26 and below the crane 116, to provide ready access to the top access openings 82 and the removable hatches 84. The access platform 138 is arranged to provide access to the liquid evaporator assembly 24, such as by providing a walking platform surrounding the venturi assembly 44 at a height sufficient to provide easy access to the injection nozzles 60. Other access structures may be included, such as additional walk ways, ladders, and platforms. Structures such as the access stairs 134, access platforms 136 and 138, the exhaust stack 112, and the header connection assembly 50 are preferably attached to the portable wastewater concentrator 20 at the operation site after the skid 34 has been placed in the intended operating location, such as on the concrete pad 130. These structures are preferably pre-formed to be easily attached by any method that requires a minimum of construction effort on site, such as with bolts, clips, and/or welding.

A control panel 140 is preferably included as part of the portable wastewater concentrator 20, such as by being secured to the skid 34, with power supply and control wiring for various components that require electrical power or other electrical wiring, such as the air pump 30, sump pump 102, movable orifice plate 68, crane 116, and control systems as described below, for example. The control panel 140 preferably also includes any hydraulic controls and/or other controls for other various portions of the portable wastewater concentrator 20. The control panel 140 is preferably pre-connected to the various components so that the no significant wiring or connects need to be made after the portable wastewater concentrator 20 arrives at an operation site. The control panel 140 in some arrangements includes a main power hook-up for connection to electrical power supplied at the operation site. In other arrangements, the control panel 140 is adapted to receive electrical and/or hydraulic power from generators and/or hydraulic pumps, respectively, powered by the power plant 32 and attached as part of the portable wastewater concentrator 20.

Turning now to FIG. 6, the portable wastewater concentrator 20 is shown assembled for operation with a computer implemented control system 150 arranged to control operating conditions, such as pressure drop, gas flow volume, and/or gas velocity, along the contained gas flow path P, and in particular through the mixing chamber 42, venturi assembly 44, the gas-liquid separator 26, and the exhaust assembly 28 to, for example, maximize the rate of evaporation of water from the wastewater. The computer implemented control system 150 includes sensors, such as pressure sensors 152, 153 located at various points along the confined gas flow path P and/or sensors, such as sensors 154, for identifying how many of the heated gas sources 52 are supplying gases to the liquid evaporator assembly 24, and a computer controller 156 programmed with one or more control programs to electronically receive and monitor output from the sensors 152-154, process the output in an electronic processing system on the computer controller 156, and provide electronic control signals to control mechanisms for controlling various adjustable components, such as the air pump 30 and/or the movable orifice plate 68 and/or various pressure control valves. In one arrangement, the computer controller 156 is carried by the control panel 140. The electronic processing system preferably includes a digital computer processor or plurality of internetworked digital computer processors.

In one arrangement, the computer implemented control system 150 includes one or more sensors arranged to sense the pressure differential across the venturi assembly 44. In one arrangement, a first differential pressure sensor 152 is arranged to sense the pressure differential. In another arrangement, a first sensor 152a is arranged to sense the pressure of the mixture in the confined gas flow path P entering the throat 58 of the venturi assembly 44 and a second sensor 152b is arranged to sense the pressure of the mixture exiting the venturi assembly 44. In one arrangement, each of the sensors 152a and 152b is a pressure sensor, the sensor 152a is located inside the mixing chamber 42 on an upstream side of the venturi assembly 44, and the sensor 152b is located inside the venturi assembly 44 or the elbow duct 66 on the downstream side of the movable orifice plate 68. Optionally, the computer implemented control system 150 may also include one or more sensors arranged to sense the pressure differential across the gas-liquid separator 26, such as a second differential pressure sensor 153. In another arrangement, a first a sensor 153a is arranged to sense the pressure of the mixture in the confined gas flow path P entering the gas-liquid separator 26 and another sensor 153b is arranged to sense the pressure of the mixture exiting the gas-liquid separator 26. Preferably, the sensor 153a is located inside the gas-liquid separator 26 adjacent the inlet 74 on an upstream side of the demister panels 78, and the sensor 153b is located inside the gas-liquid separator adjacent the exhaust outlet 76 on a downstream side of the demister panels 78. The computer implemented control system 150 also optionally includes one or more sensors 154 arranged to sense how much gas is being supplied to the mixing chamber 42 or how many of the sources 52 of heated gas are supplying gases to the mixing chamber 42. In a preferred arrangement, a sensor 154, such as a pressure sensor, is disposed inside each runner 54 of the supply manifold 50 and arranged to detect whether gases are traveling through the runner from the respective source 52 of heated gas. Temperature sensors 155 (best seen in FIG. 2A) optionally are disposed at various locations throughout the portable wastewater concentrator to provide temperature feedback to the computer implemented control system 150, which may be programmed to vary any of the operating characteristics discussed herein in order to maintain operation within preselected ranges. Each of the sensors 152a, 152b, 153a, 153b, 154, 155 is arranged to provide digital data relevant to the condition being sensed to the computer controller 156 by any convenient data transmission mechanism, such as with data wires and/or wireless transmission data transponders and the like.

The computer controller 156 is arranged, such as by appropriate software and/or hardware programming from the control program, to receive the digital data from one or more of the sensors 152-155, process the received digital data, and provide instructions to one or more adjustable components of the portable wastewater separator 20 to achieve a pre-selected operating condition, such as a pre-selected pressure drop across the venturi assembly 44, in response to the received digital data. In one arrangement, the computer controller 156 is arranged to transmit instructions to vary the speed of the air pump 30 and/or the position of the movable orifice plate 68 and/or pressure control valves, preferably in the form of control commands to an actuator that moves the movable orifice plate 68 to adjust the size of the throat and/or control commands to a control actuator for the power plant 32 or the air pump 30 to adjust the speed of the fan and/or open/close commands to valve actuators for the pressure control valves, in response to the pressures sensed by one or more of the sensors 152a and 152b. The instructions may also be responsive to pressure data sensed by the sensors 152c, 152d, and 154. The instructions are selected in response to the received digital data to maintain the pre-selected pressure drop across the venturi assembly 46 and/or across other portions of the confined gas flow path P. For example, after a pre-selected steady state flow of gasses is achieved through the portable wastewater concentrator 20 for a pre-selected period of time at a given fan speed and orifice plate position, the instructions may control one or more pressure valves between the heat sources 52 and the venturi 44, for example one or more pressure control valves and/or exhaust bypass valves, while maintaining the fan speed and venturi position at constant levels.

The pre-selected pressure drop may be provided to the computer controller 156 in any suitable manner, such as by being input by a user by, for example, through an input device, such as a keyboard (not shown), in response to a prompt from the computer controller 156, being provided as part of the control program, and/or being selected by a user from a plurality of different possible pressure drops stored, for example, in an electronic memory functionally associated with the computer controller 156. In a preferred embodiment, the pre-selected pressure drop is at least seven inches of water.

During operation of the portable wastewater concentrator 20, the liquid seal below the demister panels 78a-c is formed by maintaining the top level 160 of wastewater collected in the sump 80 above the bottom end of one or more baffles or skirts 159 projecting downwardly from one or more of the demister panels 78a-c. Preferably, the demister panels 78a-c and the one or more baffles 159 extend completely across the width of the body. The top level 160 of the wastewater is maintained bellow the bottom ends of the demister panels 78a-c, thereby forcing substantially all of the mixture of wastewater and gasses along the second portion P2 of the confined flow path to pass through the demister panels 78a-c rather than being able to flow underneath the demister panels. In one arrangement, with reference to FIG. 2A, a liquid level gauge 164 is arranged to measure the top level 160 of liquid in the body 70, and a liquid level controller is arranged to control the top level 160 in response to signals from the liquid level gauge. Preferably, the liquid level controller is arranged to maintain the top level 160 of liquid in the body at a preselected level above the bottom end of the baffles and below the bottom ends of the demister panels 78a-c. The liquid level gauge 164 may be any gauge capable of identifying the height of the top level 160 of the liquid and transmitting mechanical or electronic signals indicative of the height. In one arrangement, the liquid level gauge 164 includes a radar level sensor carried inside of the body 70; however, other types of liquid level gauges, such as a mechanical float connected with a mechanical linkage, and/or a laser liquid level gauge, may also or alternatively be used. The liquid level controller may be a computer implemented control system and/or a mechanical control system. In one arrangement, the liquid level controller includes one or more liquid intakes 166, such as a sump make-up pipe 166, for filling the body 70 with liquids, such as raw wastewater. One or more of the feed pipes 88 may also serve as liquid intakes to help fill the body 70 with wash liquid from the nozzles 90. The liquid level controller also preferably includes one or more shutoff valves 168 arranged to open and/or close one or more of the liquid intakes. The liquid level controller includes a mechanical and/or a computer controlled valve control for opening and closing the shutoff valves 168 in response to readings from the liquid level gauge, such as a mechanical linkage linked with a float system and/or a computer, such as the computer controller 156, programmed to send control signals to open and/or close the shutoff valves 168 in response to readings from the liquid level gauge, such as the radar liquid level gauge. Under such an arrangement, the portable wastewater concentrator 20 may be operated to maintain the liquid seal in the gas-liquid separator 26 by filling the body with liquid to a preselected level between the bottom end and the top end of the baffles 159, operating the gas-liquid separator 26 at a steady state by moving mixed gasses and liquids along the confined flow path P2 past the demister panels 78a-c to separate liquids from the gasses, and maintaining the top level 160 of liquid in the body 70 at about the preselected level constantly while operating the gas-liquid separator at the steady state. One method of maintaining the top level 160 at the preselected level includes monitoring the top level 60 of liquid with the liquid level gauge 166, and opening and/or closing the liquid intake 166 in response to the monitoring step, such as with a mechanical and/or computer implemented valve control.

### INDUSTRIAL APPLICABILITY

The portable wastewater concentration system described herein may be useful for processing wastewater in many different applications. In some uses, the portable wastewater concentration system can provide environmental benefits by re-capturing energy from exhaust heat gases from industrial processes to help separate clean water from wastewater and minimize environmental impact from transportation of wastewater to centralized treatment facilities. Other industrial uses may be realized as described previously herein and/or as would be clear to a person of ordinary skill in the art.

Numerous modifications to the present wastewater concentration system will be apparent to those skilled in the art in view of the foregoing description. Accordingly, this description is to be construed as illustrative only and is presented for the purpose of enabling those skilled in the art to make and use the invention and to teach the best mode of carrying out same.

## Claims

1. A portable wastewater concentrator assembly (18) comprising:
a wastewater concentrator (20) including
a liquid evaporator assembly (24),
a gas-liquid separator (26) connected with the liquid evaporator assembly (24), the gas-liquid separator (26) having a sump (80) extending downwardly from a bottom of the gas-liquid separator (26), the sump (80) including front, rear, and side walls (92, 94, 96, 98) that slope downwardly forming a truncated inverted pyramid, the front wall (92) being sloped at an angle of between 35° and 65° relative to a horizontal longitudinal axis, and the rear wall (94) and the side walls (96, 98) being sloped at an angle of between 45° and 55° relative to the horizontal longitudinal axis,
an exhaust assembly (28) having a fan (30) connected with the gas-liquid separator (26), and
a power plant assembly (32) connected with the exhaust assembly (28) and arranged to drive the fan (30);
a skid (34), the skid (34) including a support frame (36) defining an opening (38), wherein the wastewater concentrator (20) is attached to and carried by the skid (34); and
a mobile hauling platform (22);
wherein the skid (34) is removably carried by the mobile hauling platform (22), the front, rear, and side walls (92, 94, 96, 98) of the sump (80) extending downwardly through the opening (38), and whereby the wastewater concentrator (20) may be hauled as a single unit on the mobile hauling platform (22) for transportation on roads and to remote operating locations, and
wherein the support frame (36) is disposed below the liquid evaporator assembly (24), gas-liquid separator (26), exhaust assembly (28), and power plant assembly (32), and the wastewater concentrator (20) may be removed from the mobile hauling platform (22) as a single unit by lifting the support frame (36), and the mobile hauling platform (22) comprises a truck bed or a semi-truck trailer comprising an upper level carrying surface and a recessed portion (132) below the upper level carrying surface, the skid (34) is carried on the upper level, and the sump (80) extends below the skid (34) and the upper level into the recessed portion.

2. The portable wastewater concentrator assembly (18) of claim 1, wherein the recessed portion is partly defined by a lower level carrying surface of the truck bed.

3. The portable wastewater concentrator assembly (18) of claim 1, wherein the support frame (36) comprises a plurality of beams (40b) interconnected and arranged in a horizontal plane, and the skid (34) further comprises a lift frame (40) comprising vertical columns braced with cross beams that form a scaffolding surrounding the wastewater concentrator (20).

4. The portable wastewater concentrator assembly (18) of claim 1, wherein the wastewater concentrator (20) has an effective treatment capacity of more than 75700 litres (twenty thousand gallons) per day, preferably between approximately 113400 and 189000 litres (thirty and fifty thousand gallons) per day, and more preferably about 151400 litres (forty thousand gallons) per day.

5. The portable wastewater concentrator assembly (18) of claim 1, wherein the liquid evaporator assembly (24) comprises a mixing chamber (42) and a venturi assembly (44) defining a first portion of a confined gas flow path through the wastewater concentrator (20), the mixing chamber (42) comprising a gas inlet (46) to receive heated exhaust gas and a wastewater injection nozzle (60) arranged to inject wastewater into the mixing chamber (42), wherein the gas inlet (46) is connected with an exhaust gas manifold that is arranged for connection to at least one source of heated exhaust gas, and the venturi assembly (44) is arranged to receive a mixture of the heated exhaust gas and wastewater from the mixing chamber (42).

6. The portable wastewater concentrator assembly (18) of claim 5 wherein the gas-liquid separator (26) comprises a separation chamber defining a second portion of the gas flow path, the separation chamber comprising an inlet (74) arranged to receive the mixture from the venturi assembly (44), an outlet (76) arranged to direct gases to the exhaust assembly (28), at least one demisting panel (78a, 78b, 78c) disposed across the gas flow path, and the sump (80) is arranged to receive dropping fluids separated from the mixture by the demisting panel (78a, 78b, 78c).

7. The portable wastewater concentrator assembly (18) of claim 1, further comprising a skimmer tray (108) disposed in one sidewall of the gas-liquid separator (26).

8. The portable wastewater concentrator assembly (18) of claim 6, wherein the skimmer tray (108) drains to an overflow pipe (109).

## Patentansprüche

1. Mobile Abwasserkonzentratoranordnung (18), umfassend:
einen Abwasserkonzentrator (20) einschließlich
einer Flüssigkeitsverdampferanordnung (24),
einen Gas-Flüssigkeit-Abscheider (26), der mit der Flüssigkeitsverdampferanordnung (24) verbunden ist, wobei der Gas-Flüssigkeit-Abscheider (26) einen Sammelbehälter (80) aufweist, der sich von der Unterseite des Gas-Flüssigkeit-Abscheider (26) nach unten erstreckt, wobei der Sammelbehälter (80) eine Vorder-, eine Rück- und Seitenwände (92, 94, 96, 98) enthält, die sich nach unten neigen und dadurch eine stumpfe umgekehrte Pyramide bilden, wobei die Vorderwand (92) mit einem Winkel von zwischen 35° und 65° bezüglich der horizontalen Längsachse geneigt ist und die Rückwand (94) und die Seitenwände (96, 98) mit einem Winkel von zwischen 45° und 55° bezüglich der horizontalen Längsachse geneigt sind,
eine Auslassanordnung (28), die einen Lüfter (30) aufweist, der mit dem Gas-Flüssigkeit-Abscheider (26) verbunden ist, und
eine Kraftwerkanordnung (32), die mit der Auslassanordnung (28) verbunden und angeordnet ist, um den Lüfter (30) anzutreiben;
eine Rampe (34), wobei die Rampe (34) einen Stützrahmen (36) enthält, der eine Öffnung (38) definiert,
wobei der Abwasserkonzentrator (20) an die Rampe (34) angebracht ist und von dieser getragen wird; und
eine bewegliche Beförderungsplattform (22);
wobei die Rampe (34) entfernbar von der beweglichen Beförderungsplattform (22) getragen wird, die Vorder-, Rück- und Seitenwände (92, 94, 96, 98) des Auffangbehälters (80) sich durch die Öffnung (38) nach unten erstrecken, und wodurch der Abwasserkonzentrator (20) als eine einzelne Einheit auf der beweglichen Beförderungsplattform (22) für den Transport auf Straßen und zu entfernt gelegenen Betriebsstätten befördert werden kann, und
wobei der Stützrahmen (36) unterhalb der Flüssigkeitsverdampferanordnung (24), des Gas-Flüssigkeit-Abscheiders (26), der Auslassanordnung (28) und der Kraftwerkanordnung (32) angeordnet ist, und der Abwasserkonzentrator (20) von der beweglichen Beförderungsplattform (22) als eine einzelne Einheit durch Anheben des Stützrahmens (36) entfernt werden kann, und die bewegliche Beförderungsplattform (22) eine Ladefläche oder einen Sattelzugschlepper umfasst, die bzw. der eine obere Tragfläche und einen vertieften Abschnitt (132) unterhalb der oberen Tragfläche umfasst, wobei die Rampe (34) auf der oberen Fläche getragen wird und der Auffangbehälter (80) sich unterhalb der Rampe (34) und der oberen Fläche in den vertieften Abschnitt erstreckt.

2. Mobile Abwasserkonzentratoranordnung (18) nach Anspruch 1, wobei der vertiefte Abschnitt teilweise durch eine untere Tragfläche der Ladefläche definiert wird.

3. Mobile Abwasserkonzentratoranordnung (18) nach Anspruch 1, wobei der Stützrahmen (36) eine Vielzahl von Trägern (40b) umfasst, die auf einer horizontalen Ebene miteinander verbunden und angeordnet sind, und wobei die Rampe (34) ferner einen Heberahmen (40) umfasst, der vertikale Säulen umfasst, die mit den Querträgern verstrebt sind, welche ein den Abwasserkonzentrator (20) umgebendes Gerüst bilden.

4. Mobile Abwasserkonzentratoranordnung (18) nach Anspruch 1, wobei der Abwasserkonzentrator (20) eine effektive Behandlungskapazität von mehr als 75700 Litern (zwanzigtausend Gallonen) pro Tag, vorzugsweise zwischen ungefähr 113400 und 189000 Litern (dreißig- und fünfzigtausend Gallonen) pro Tag und noch bevorzugter etwa 151400 Litern (vierzigtausend Gallonen) pro Tag, aufweist.

5. Mobile Abwasserkonzentratoranordnung (18) nach Anspruch 1, wobei die Flüssigkeitsverdampferanordnung (24) eine Mischkammer (42) und eine Venturi-Anordnung (44) umfasst, die einen ersten Abschnitt eines begrenzten Gasströmungspfads durch den Abwasserkonzentrator (20) definieren, wobei die Mischkammer (42) einen Gaseinlass (46), um erhitztes Abgas aufzunehmen, und eine Abwassereinspritzdüse (60) umfasst, die angeordnet ist, um Abwasser in die Mischkammer (42) einzuspritzen, wobei der Gaseinlass (46) mit einem Abgasverteiler verbunden ist, welcher zur Verbindung mit mindestens einer Quelle von erhitztem Abgas angeordnet ist, und die Venturi-Anordnung (44) angeordnet ist, um eine Mischung des erhitzten Abgases und Abwassers aus der Mischkammer (42) aufzunehmen.

6. Mobile Abwasserkonzentratoranordnung (18) nach Anspruch 5, wobei der Gas-Flüssigkeit-Abscheider (26) eine Abscheidekammer umfasst, die einen zweiten Abschnitt des Gasströmungspfads definiert, wobei die Abscheidekammer einen Einlass (74) umfasst, der angeordnet ist, um die Mischung aus der Venturi-Anordnung (44) aufzunehmen, einen Auslass (76), der angeordnet ist, um Gase zur Auslassanordnung (28) zu leiten, mindestens eine Entnebelungsplatte (78a, 78b, 78c), die entlang des Gasströmungspfads angeordnet ist, und wobei der Auffangbehälter (80) angeordnet ist, um tropfende Fluide aufzunehmen, die von der Mischung durch die Entnebelungsplatte (78a, 78b, 78c) abgeschieden werden.

7. Mobile Abwasserkonzentratoranordnung (18) nach Anspruch 1, ferner umfassend eine Abschöpfschale (108), die in einer Seitenwand des Gas-Flüssigkeit-Abscheiders (26) angeordnet ist.

8. Mobile Abwasserkonzentratoranordnung (18) nach Anspruch 6, wobei die Abschöpfschale (108) in ein Überlaufrohr (109) abfließt.

## Revendications

1. Ensemble de concentrateur d'eaux usées portable (18) comprenant :
un concentrateur d'eaux usées (20) comportant
un ensemble d'évaporateur liquide (24),
un séparateur gaz-liquide (26) raccordé à l'ensemble d'évaporateur liquide (24), le séparateur gaz-liquide (26) ayant un puisard (80) s'étendant vers le bas à partir d'un fond du séparateur gaz-liquide (26), le puisard (80) comportant des parois avant, arrière, et latérales (92, 94, 96, 98) qui sont en pente descendante, formant une pyramide inversée tronquée, la paroi avant (92) étant en pente selon un angle entre 35° et 65° par rapport à un axe longitudinal horizontal, et la paroi arrière (94) et les parois latérales (96, 98) étant en pente selon un angle entre 45° et 55° par rapport à l'axe longitudinal horizontal,
un ensemble d'échappement (28) ayant un ventilateur (30) raccordé au séparateur gaz-liquide (26), et
un groupe de propulsions (32) raccordés à l'ensemble d'échappement (28) et agencés pour entraîner le ventilateur (30) ;
un patin (34), le patin (34) comportant un cadre de support (36) définissant une ouverture (38), dans lequel le concentrateur d'eaux usées (20) est fixé au patin (34) et est porté par celui-ci ; et
une plateforme de traction mobile (22) ;
dans lequel le patin (34) est porté amovible par la plateforme de traction mobile (22), les parois avant, arrière, et latérales (92, 94, 96, 98) du puisard (80) s'étendant vers le bas à travers l'ouverture (38), et moyennant quoi le concentrateur d'eaux usées (20) peut être tiré comme une unité unique sur la plateforme de traction mobile (22) pour un transport sur des routes ou vers des emplacements de fonctionnement à distance, et
dans lequel le cadre de support (36) est disposé en dessous de l'ensemble d'évaporateur liquide (24), du séparateur gaz-liquide (26), de l'ensemble d'échappement (28), et du groupe de propulsions (32), et le concentrateur d'eaux usées (20) peut être retiré de la plateforme de traction mobile (22) en tant qu'unité unique en levant le cadre de support (36), et la plateforme de traction mobile (22) comprend une plateforme de camion ou un semi-remorque comprenant une surface d'appui de niveau supérieur et une portion évidée (132) sous la surface d'appui de niveau supérieur, le patin (34) est porté sur le niveau supérieur, et le puisard (80) s'étend sous le patin (34) et le niveau supérieur dans la portion évidée.

2. Ensemble de concentrateur d'eaux usées portable (18) selon la revendication 1, dans lequel la portion évidée est définie en partie par une surface d'appui de niveau inférieur de la plateforme de camion.

3. Ensemble de concentrateur d'eaux usées portable (18) selon la revendication 1, dans lequel le cadre de support (36) comprend une pluralité de poutres (40b) raccordées entre elles et agencées dans un plan horizontal, et le patin (34) comprend en outre un cadre de monte-charge (40) comprenant des colonnes verticales renforcées par des traverses qui forment un échafaudage entourant le concentrateur d'eaux usées (20).

4. Ensemble de concentrateur d'eaux usées portable (18) selon la revendication 1, dans lequel le concentrateur d'eaux usées (20) a une capacité de transfert effective de plus de 75 700 litres (vingt mille gallons) par jour, de préférence entre approximativement 113 400 et 189 000 litres (trente et cinquante mille gallons) par jour, et de manière davantage préférée environ (151400 litres (quarante mille gallons) par jour.

5. Ensemble de concentrateur d'eaux usées portable (18) selon la revendication 1, dans lequel l'ensemble d'évaporateur liquide (24) comprend une chambre de mélange (42) et un ensemble de tubes venturi (44) définissant une première portion d'un chemin d'écoulement de gaz confiné à travers le concentrateur d'eaux usées (20), la chambre de mélange (42) comprenant un orifice d'admission de gaz (46) pour recevoir un gaz d'échappement chauffé et une buse d'injection d'eaux usées (60) agencée pour injecter des eaux usées dans la chambre de mélange (42), dans lequel l'orifice d'admission de gaz (46) est raccordé à un collecteur de gaz d'échappement qui est agencé pour un raccordement à au moins une source de gaz d'échappement chauffé, et l'ensemble de tubes venturi (44) et agencé pour recevoir un mélange du gaz d'échappement chauffé et des eaux usées provenant de la chambre de mélange (42).

6. Ensemble de concentrateur d'eaux usées portable (18) selon la revendication 5, dans lequel le séparateur gaz-liquide (26) comprend une chambre de séparation définissant une seconde portion du chemin d'écoulement de gaz, la chambre de séparation comprenant un orifice d'admission (74) agencé pour recevoir le mélange à partir de l'ensemble de tubes venturi (44), un orifice de refoulement (76) agencé pour diriger les gaz vers l'ensemble d'échappement (28), au moins un panneau de déshumidification (78a, 78b, 78c) disposé sur le chemin d'écoulement de gaz, et le puisard (80) est agencé pour recevoir des fluides de coulée séparés du mélange par le panneau de déshumidification (78a, 78b, 78c).

7. Ensemble de concentrateur d'eaux usées portable (18) selon la revendication 1, comprenant en outre un plateau récupérateur (108) disposé dans une paroi latérale du séparateur gaz-liquide (26).

8. Ensemble de concentrateur d'eaux usées portable (18) selon la revendication 6, dans lequel le plateau récupérateur (108) s'écoule vers un tuyau de trop-plein (109).
